# EUROPEAN PATENT APPLICATION

(11) **EP 2 608 526 A1**
(43) Date of publication of application: **26.06.2013**
(21) Application number: 11818078.5
(22) Date of filing: 03.08.2011
(51) Int. Cl.: H04N 5/232, H04N 5/225, H04N 5/91

(54) **IMAGE CAPTURING DEVICE, METHOD FOR CORRECTING IMAGE AND SOUND, RECORDING MEDIUM**

(30) Priority: 18.08.2010 JP 2010183143
(71) Applicant: NEC CASIO Mobile Communications, Ltd., Kawasaki-shi Kanagawa 211-8666 (JP)
(72) Inventor: SHINOKI, Yudai, Kawasaki-shi Kanagawa 211-8666 (JP)
(74) Representative: Vossius & Partner
(86) International application number: PCT/JP2011/067776
(87) International publication number: WO 2012/023436

(57) **Abstract**

The present invention is aimed at correcting sound signals acquired by an image capturing device. The image capturing device includes an information holder which holds identifying information for identifying each of a plurality of captured image scenes, image processing information for indicating an image correcting process for each of a plurality of captured image scenes, and sound processing information for indicating a sound correcting process for each of a plurality of captured image scenes, in association with each other, a camera which captures an image and generates an image signal representing the captured image, a microphone which acquires sounds and generates a sound signal when the camera captures the image, a corrector which selects one of the captured image scenes which represents the image represented by the image signal, based on the image, performs, on the image signal, a correcting process indicated by the image processing information that is associated with the identifying information about the selected captured image scene, and performs, on the sound signal, a correcting process indicated by the sound processing information that is associated with the identifying information about the selected captured image scene, and a recorder which records the image signal and the sound signal after the correcting processes is executed.

## Description

### Technical field:

The present invention relates to an image capturing device, a method of correcting images and sounds, and a recording medium.

### Background art:

Patent document 1 discloses a technology for judging a sound scene that includes sounds that are played back.

According to the technology disclosed in Patent document 1, when contents including a caption text displayed on a video picture and a sound signal are acquired, a sound scene is judged based on the caption text included in the content. When the sound signal included in the content is demodulated, the sound signal is adjusted based on the judged sound scene.

### Prior art documents:

### Patent documents:

Patent document 1: JP2008-177734A

### Summary of the invention:

### Problems to be solved by the invention:

According to the technology disclosed in Patent document 1, a sound scene is judged based on a caption text included in the content, and a sound signal is adjusted based on the result of the judgment of the sound scene. Therefore, the caption text included in the contents is required to adjust the sound signal.

However, image capturing devices for recording sounds and capturing moving images do not generate caption texts.

Consequently, it is difficult for image capturing devices for recording sounds and capturing moving images to adjust or correct sound signals acquired thereby according to the technology disclosed in Patent document 1.

It is an object of the present invention to provide an image capturing device, a method of correcting images and sounds, and a recording medium which will solve the above problems. Means for solving the problems:

According to the present invention, there is provided an image capturing device for capturing an image, comprising holding means that holds identifying information for identifying each of a plurality of captured image scenes, image processing information for indicating an image correcting process for each of a plurality of captured image scenes, and sound processing information for indicating a sound correcting process for each of a plurality of captured image scenes, in association with each other, image capturing means that captures an image and generates an image signal representing the captured image, acquiring means that acquires sounds and generates a sound signal when the image capturing means captures the image, correcting means that selects one of the captured image scenes which represents the image represented by the image signal, based on the image, performs, on the image signal, a correcting process indicated by the image processing information that is associated with the identifying information about the captured image scene of the image, and performs, on the sound signal, a correcting process indicated by the sound processing information that is associated with the identifying information about the captured image scene of the image, and recording means that records the image signal after the correcting process is executed and the sound signal after the correcting process is executed.

According to the present invention, there is also provided a method of correcting images and sounds in an image capturing device for capturing an image, comprising holding identifying information for identifying each of a plurality of captured image scenes, image processing information for indicating an image correcting process for each of a plurality of captured image scenes, and sound processing information for indicating a sound correcting process for each of a plurality of captured image scenes, in association with each other in holding means, capturing an image and generating an image signal representing the captured image, acquiring sounds and generating a sound signal when the image is captured, selecting one of the captured image scenes which represents the image represented by the image signal, based on the image, performing, on the image signal, a correcting process indicated by the image processing information that is associated with the identifying information about the captured image scene of the image, and performing, on the sound signal, a correcting process indicated by the sound processing information that is associated with the identifying information about the captured image scene of the image, and recording the image signal after the correcting process is executed and the sound signal after the correcting process is executed.

According to the present invention, there is further provided a computer-readable recording medium recording therein a program for enabling a computer in an image capturing device for capturing an image to perform a holding procedure for holding identifying information for identifying each of a plurality of captured image scenes, image processing information for indicating an image correcting process for each of a plurality of captured image scenes, and sound processing information for indicating a sound correcting process for each of a plurality of captured image scenes, in association with each other in holding means, an image capturing procedure for capturing an image and generating an image signal representing the captured image, an acquiring procedure for acquiring sounds and generating a sound signal when the image is captured, a correcting procedure for selecting one of the captured image scenes which represents the image represented by the image signal, based on the image, performing, on the image signal, a correcting process indicated by the image processing information that is associated with the identifying information about the captured image scene of the image, and performing, on the sound signal, a correcting process indicated by the sound processing information that is associated with the identifying information about the captured image scene of the image, and a recording procedure for recording the image signal after the correcting process is executed and the sound signal after the correcting process is executed.

### Advantages of the invention:

According to the present invention, it is possible to correct sounds signals that are acquired by an image capturing device.

### Brief description of the drawings:

Fig. 1 is a block diagram showing the configurational of an image capturing device according to an exemplary embodiment of the present invention;
Fig. 2 is a flowchart of an operation sequence of scene recognizer 21;
Fig. 3 is a flowchart of an operation sequence of image adjuster 22;
Fig. 4 is a flowchart of an operation sequence of sound adjuster 23; and
Fig. 5 is a diagram illustrative of the manner in which image capturing device 1 operates to capture an image of fireworks.

### Mode for carrying out the invention:

An exemplary embodiment of the present invention will be described below with reference to the drawings.

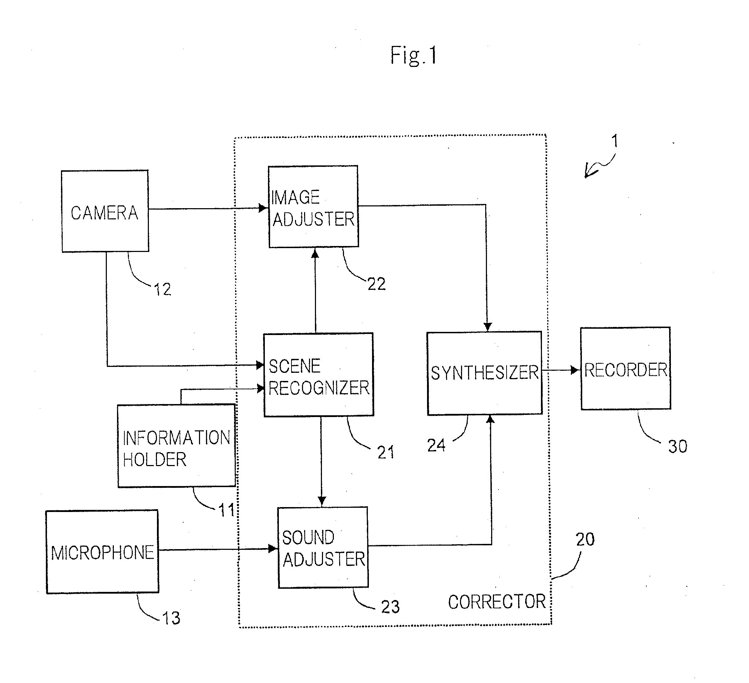

Fig. 1 is a block diagram showing the configurational of an image capturing device according to an exemplary embodiment of the present invention.

Image capturing device 1 serves as a recording device having a moving image capturing function. Image capturing device 1 may be implemented as a digital camcorder, a mobile telephone, a PHS (Personal Handyphone System), a PDA (Personal Digital Assistant), or the like.

Image capturing device 1 includes information holder 11, camera 12, microphone 13, corrector 20, and recorder 30. Corrector 20 includes scene recognizer 21, image adjuster 22, sound adjuster 23, and synthesizer 24.

Information holder 11 can generally be referred to as a holding means.

Information holder 11 holds identifying information for identifying each of a plurality of captured image scenes, image processing information for indicating an image correcting process for each of a plurality of captured image scenes, and sound processing information for indicating a sound correcting process for each of a plurality of captured image scenes, in association with each other. The captured image scenes represent fireworks, people, dogs, seas, mountains, and night views. The identifying information for identifying the captured image scenes include feature points of sample images representative of the captured image scenes. The image processing information and the sound processing information indicate corrective parameters for identifying the correcting processes, for example.

For example, information holder 11 holds identifying information for identifying a captured image scene such as of a firework, image processing information for indicating an image correcting process for the captured image scene of the firework, and sound processing information for indicating a sound correcting process for indicating an image correcting process for the captured image scene of the firework, in association with each other.

Camera 12 can generally be referred to as an image capturing means.

Camera 12 captures an image and generates an image signal representing the captured image. Camera 12 captures a moving image, for example, and generates an image signal representing the captured moving image. When camera 12 generates an image signal, it supplies the generated image signal to scene recognizer 21 and image adjuster 22.

Microphone 13 can generally be referred to as an acquiring means.

When camera 12 captures an image, microphone 13 acquires sounds and generates a sound signal. When microphone generates a sound signal, it supplies the generated sound signal to sound adjuster 23.

Corrector 20 can generally be referred to as a correcting means.

Based on an image represented by an image signal, corrector 20 selects one of a plurality of captured image scenes which represents the image. Then, corrector 20 performs, on the image signal, a correcting process indicated by the image processing information that is associated with the identifying information about the selected captured image scene, and performs, on the sound signal, a correcting process indicated by the sound processing information that is associated with the identifying information about the selected captured image scene.

Scene recognizer 21 performs a scene recognizing function. When scene recognizer 21 receives an image signal while performing the scene recognizing function, scene recognizer 21 selects, based on the image represented by the image signal, one of a plurality of captured image scenes which represents the image.

Scene recognizer 21 extracts feature points of the image represented by the image signal, selects, among the identifying information for identifying captured image scenes which are held in information holder 11, identifying information whose degree of correlation to the extracted feature points exceeds a predetermined threshold value. When scene recognizer 21 selects a plurality of items of identifying information, it then selects one of the items of identifying information whose degree of correlation is highest. Insofar as scene recognizer 21 incorporates a technology for selecting a captured image scene, the process of selecting a captured image scene is not limited to the illustrated process.

When scene recognizer 21 selects, among a plurality of captured image scenes, identifying information of a captured image scene which represents an image indicated by an image signal, scene recognizer 21 refers to information holder 11, and extracts therefrom image processing information that is associated with the selected identifying information of the captured image scene and sound processing information that is associated with the selected identifying information of the captured image scene. When scene recognizer 21 extracts the image processing information and the sound processing information, it supplies the extracted image processing information to image adjuster 22 and supplies the extracted sound processing information to sound adjuster 23.

Scene recognizer 21 may supply the selected identifying information of the captured image scene to both image adjuster 22 and sound adjuster 23. Image adjuster 22 holds, in advance, identifying information of respective captured image scenes and image processing information in relation to each other. When image adjuster 22 receives the identifying information of the captured image scene which has been selected by scene recognizer 21, image adjuster 22 acquires image processing information that is related to the received identifying information of the captured image scene. Sound adjuster 23 holds, in advance, identifying information of respective captured image scenes and sound processing information in relation to each other. When sound adjuster 23 receives the identifying information of the captured image scene which has been selected by scene recognizer 21, sound adjuster 22 acquires sound processing information that is related to the received identifying information of the captured image scene.

Scene recognizer 21 may supply both image adjuster 22 and sound adjuster 23 with correlation information indicative of the degree of correlation (scene probability) between the selected captured image scene and the image represented by the image signal. The degree of correlation is higher as the correlation between the captured image scene identified by the selected identifying information and the image represented by the image signal.

Image adjuster 22 receives an image signal from camera 12. Image adjuster 22 also receives image processing information from scene recognizer 21.

When image adjuster 22 receives an image signal and image processing information, it performs a correcting process indicated by the image processing information on the image signal. For example, when image adjuster 22 receives an image signal indicative of a firework and image processing information about the captured image scene of the firework, it performs a correcting process on an image representing the captured image scene of the firework, thereby correcting the image signal representing the firework.

Image adjuster 22 may receive an image signal and degree-of-correlation information, for example, and correct the image signal depending on the degree of correlation represented by the degree-of-correlation information. For example, if the degree of correlation represented by the degree-of-correlation information exceeds a predetermined image correcting threshold value, then image adjuster 22 corrects the image signal, and if the degree of correlation is equal to or smaller than the image correcting threshold value, then image adjuster 22 does not correct the image signal. After the correcting process, image adjuster 22 supplies the image signal to synthesizer 24.

Sound adjuster 23 receives a sound signal from microphone 13. Sound adjuster 23 also receives sound processing information from scene recognizer 21.

When sound adjuster 23 receives a sound signal and sound processing information, it performs a correcting process indicated by the sound processing information on the sound signal. For example, when sound adjuster 23 receives a sound signal indicative of the sound of a firework and sound processing information about the captured image scene of the firework, it performs a correcting process on sound representing the captured image scene of the firework, thereby correcting the sound signal representing the sound of the firework. For example, sound adjuster 23 lowers the sound level of the sound signal representing the sound of the firework so that the sound of the firework will not clip, or corrects the frequency characteristics of the sound signal so that deep bass will boom out.

Sound adjuster 23 may receive a sound signal and degree-of-correlation information, for example, and correct the sound signal depending on the degree of correlation represented by the degree-of-correlation information. For example, if the degree of correlation represented by the degree-of-correlation information exceeds a predetermined sound correcting threshold value, then sound adjuster 23 corrects the sound signal, and if the degree of correlation is equal to or smaller than the sound correcting threshold value then sound adjuster 23 does not correct the sound signal.

Sound adjuster 23 can switch between correcting processes for sound signals in each one frame period from the acquisition of an image signal frame to the acquisition of a new subsequent image signal frame, or in every several frame periods. The time interval at which sound adjuster 23 corrects a sound signal can be set by the user of image capturing device 1. After the correcting process, sound adjuster 23 supplies the sound signal to synthesizer 24.

Synthesizer 24 receives the image signal from image adjuster 22 after the correcting process thereof and also receives the sound signal from sound adjuster 23 after the correcting process thereof.

When synthesizer 24 receives the image signal and the sound signal, it relates the image signal and the sound signal to each other, and generates moving image data made up of the image signal and the sound signal that are related to each other. Synthesizer 24 supplies the generated moving image data to recorder 30. Synthesizer 24 may relate the image signal generated by camera 12 and the sound signal generated by microphone 13 to each other, generate raw moving image data made up of the image signal and the sound signal, and supply the raw moving image data to recorder 30.

Recorder 30 can generally be referred to as a recording means.

Recorder 30 records the image signal after the correcting process thereof and the sound signal after the correcting process thereof.

According to the present exemplary embodiment, when recorder 30 receives moving image data from synthesizer 24, recorder 30 converts the moving image data into moving image data of a given data format, and records the converted moving image data therein. The data format represents a recording type, an image size, or a compression method.

Recorder 30 may receive, for example, raw moving image data supplied from synthesizer 24 and image processing information and sound processing information extracted by scene recognizer 21, and record the raw moving image data, image processing information, and sound processing information in relation to each other in recorder 30. In this manner, even when scene recognizer 21 selects a captured image scene that is different from the actual captured image scene, the user of image capturing device 1 can play back the raw moving image data and enjoy images represented thereby.

Image capturing device 1 may be implemented by a computer. In such a case, the computer reads programs recorded in a recording medium such as a computer-readable CD-ROM (Compact Disk Read Only Memory), and executes the programs to function as information holder 11, camera 12, microphone 13, corrector 20, and recorder 30. The recording medium is not limited to the CD-ROM, but may be changed.

A method of correcting images and sounds with image capturing device 1 will be described below.

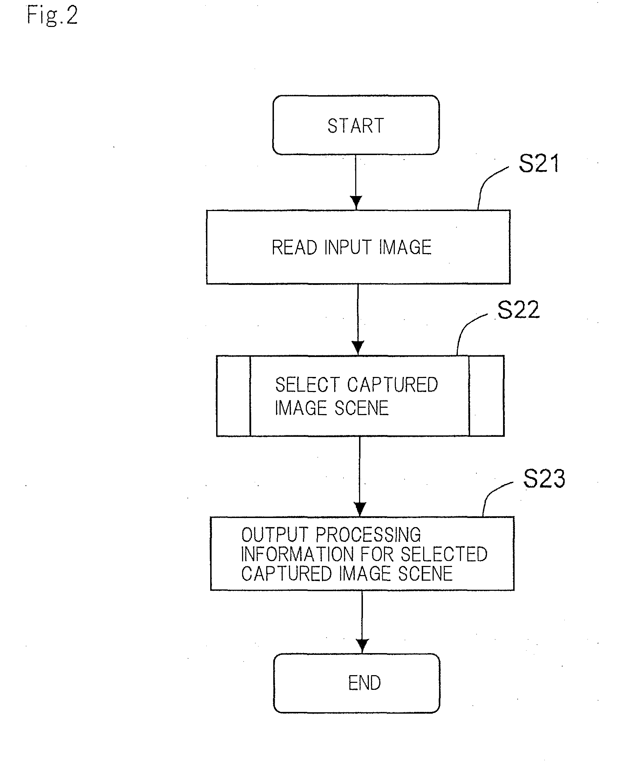

Fig. 2 is a flowchart of an operation sequence of scene recognizer 21.

When scene recognizer 21 receives an image signal from camera 12, scene recognizer 21 reads the image signal (step S21).

When scene recognizer 21 reads the image signal, it selects, based on the image represented by the image signal, one of a plurality of captured image scenes which represents the image. Specifically, scene recognizer 21 performs an image processing process on the image signal, and selects, based on the result of the image processing process, a captured image scene of the image represented by the image signal from among captured image scenes that are identified by a plurality of items of identifying information in information holder 11 (step S22).

When scene recognizer 21 select, based on the image represented by the image signal, one of a plurality of captured image scenes which represents the image, scene recognizer 21 refers to information holder 11, outputs image processing information which is associated with the identifying information of the selected captured image scene to image adjuster 22, and also outputs sound processing information which is associated with the identifying information of the selected captured image scene to sound adjuster 23 (step S23).

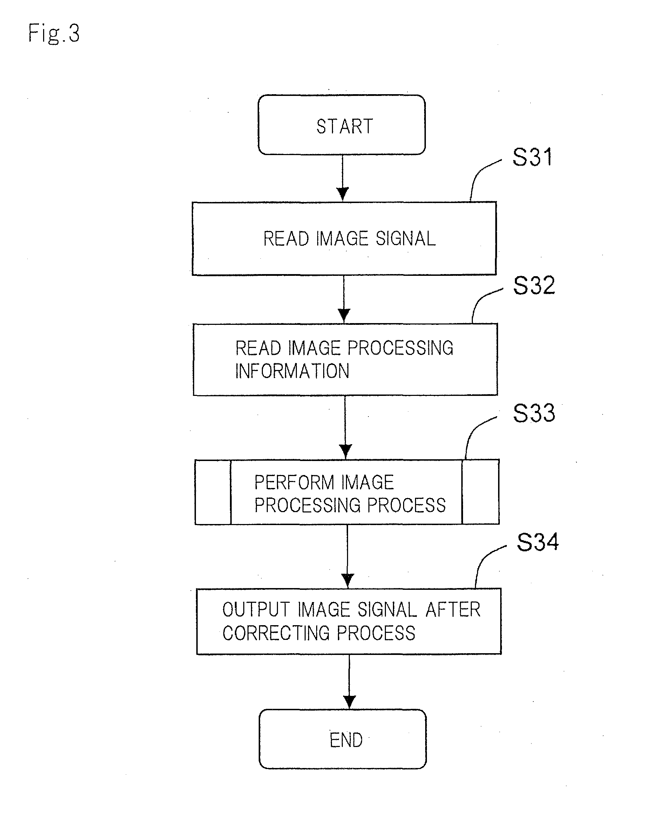

Fig. 3 is a flowchart of an operation sequence of image adjuster 22.

When image adjuster 22 receives an image signal from camera 12, image adjuster 22 reads the image signal (step S31).

When image adjuster 22 reads the image signal, it receives image processing information from scene recognizer 21 and reads the received image processing information (step S32).

When image adjuster 22 reads the image signal and the image processing information, image adjuster 22 performs a correcting process represented by the image processing information on the image signal (step S33).

After image adjuster 22 has performed the correcting process, it outputs the image signal after the correcting process to synthesizer 24 (step S34).

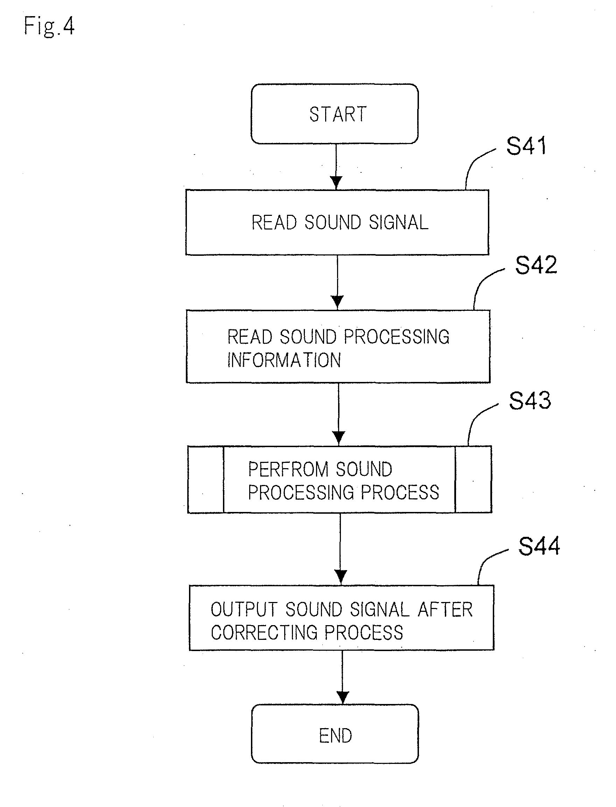

Fig. 4 is a flowchart of an operation sequence of sound adjuster 23.

When sound adjuster 23 receives a sound signal from microphone 13, sound adjuster 23 reads the sound signal (step S41).

When sound adjuster 23 reads the sound signal, it receives sound processing information from scene recognizer 21 and reads the received sound processing information (step S42).

When sound adjuster 23 reads the sound signal and the sound processing information, sound adjuster 23 performs a correcting process represented by the sound processing information on the sound signal (step S43).

After sound adjuster 23 has performed the correcting process, it outputs the sound signal after the correcting process to synthesizer 24 (step S44).

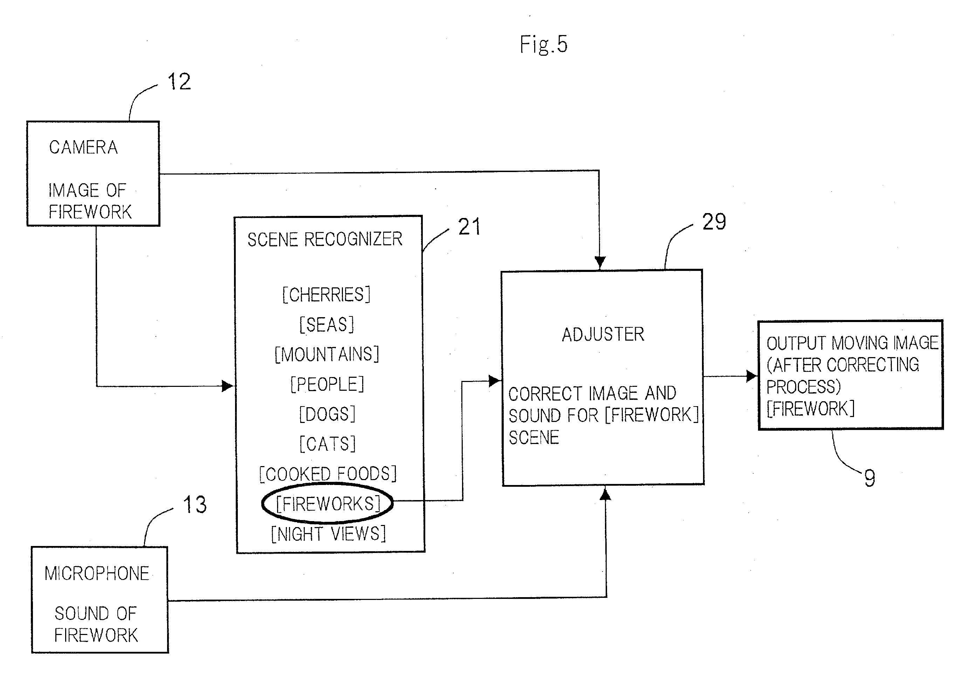

Fig. 5 is a diagram illustrative of the manner in which image capturing device 1 operates to capture the image of a firework.

In Fig. 5, information holder 11 holds therein the identifying information of captured image scenes representative of cherries, seas, mountains, people, dogs, cats, cooked foods, fireworks, and night views, in association with predetermined image processing information and sound processing information. Adjuster 29 comprises image adjuster 22, sound adjuster 23, and synthesizer 24 shown in Fig. 1.

Camera 12 captures an image of a firework and generates an image signal representative of the firework, and supplies the image signal to scene recognizer 21 and adjuster 29. When camera 12 captures the image of the firework, microphone 13 acquires the sound of the firework, generates a sound signal representing the sound of the firework, and supplies the generated sound signal to adjuster 29.

When scene recognizer 21 receives the image signal representative of the firework from camera 12, scene recognizer 21 specifies the identifying information which identifies the captured image scene indicative of the firework from among the identifying information held in information holder 11. When scene recognizer 21 specifies the identifying information which identifies the captured image scene indicative of the firework, scene recognizer 21 supplies the image information associated with the specified identifying information and the sound image information associated with the specified identifying information to adjuster 29.

When adjuster 29 receives the image signal representative of the firework, the sound signal representative of the firework, and the image processing information and the sound processing information that are suitable for the captured image scene of the firework, adjuster 29 performs a correcting process on the image signal representative of the firework based on the image processing information and also performs a correcting process on the sound signal representative of the sound of the firework based on the sound processing information. For example, adjuster 29 lowers the sound level of the sound signal representing the sound of the firework so that the sound of the firework will not be clipped, or adjusts the frequency characteristics of the sound signal so that deep bass will boom out. In order to correct a sound signal representative of a human voice, adjuster 29 limits the frequency component of the sound signal to the frequencies of human speech.

Adjuster 29 then synthesizes the image signal after the correcting process and the sound signal after the correcting process, and outputs moving image data, on which the correcting processes that are suitable for the captured image scene of the firework have been performed, as corrected moving image data 9 to recorder 30.

According to the present exemplary embodiment, image capturing device 1 includes information holder 11 which holds identifying information for identifying each of a plurality of captured image scenes, image processing information for indicating an image correcting process for each of a plurality of captured image scenes, and sound processing information for indicating a sound correcting process for each of a plurality of captured image scenes, in association with each other. With image capturing device 1, camera 12 captures an image and generates an image signal representing the captured image, and microphone 13 acquires sounds and generates a sound signal. Based on the image indicated by the image signal, corrector 20 selects one of a plurality of captured image scenes which represents the image, from among captured image scenes identified by the items of identifying information that are held in information holder 11. Then, corrector 20 performs, on the image signal, a correcting process indicated by the image processing information that is associated with the identifying information about the selected captured image scene, and performs, on the sound signal, a correcting process indicated by the sound processing information that is associated with the identifying information about the selected captured image scene.

Accordingly, image capturing device 1 selects, based on an image signal generated by camera 12, a captured image scene of the image indicated by the image from among a plurality of captured image scenes, and specifies image processing information and sound processing information about the selected captured image scene. Therefore, image capturing device 1 can perform correcting processes that are suitable for the captured image scene on both the image signal and the sound signal, based on the image processing information and the sound processing information that are specified.

Consequently, image capturing device 1 can perform a correcting process that is suitable for the captured image scene on the sound signal acquired by microphone 13.

Since image capturing device 1 uses the identifying information about the captured image scene which is used to correct the image signal, as signal for correcting the sound signal, image capturing device 1 does not need to newly specify a captured image scene for correcting the sound signal, and can appropriately determine a correcting process to be performed on the sound signal.

There is an image capturing device for identifying a captured image scene including sounds by performing a speech recognition function, available as an image capturing device for correcting sound signals. This image capturing device identifies a captured image scene for correcting an image signal and also identifies a captured image scene for correcting a sound signal by carrying out a complex processing sequence according to the speech recognition function. Therefore, the image capturing device undergoes such a high processing burden that a mobile terminal device with a low processing capability for use as an image capturing device finds it difficult to correct sound signals by performing a speech recognition function.

Image capturing device 1, on the other hand, does not need to identify a captured image scene that includes sound by performing a speech recognition function in order to correct a sound signal. Therefore, image capturing device 1 may be devoid of a complex processing sequence according to a speech recognition function, and can have a reduced throughput. Image capturing device 1 is thus capable of correcting a sound signal suitable for a captured image scene according to a simple process.

Furthermore, as image capturing device 1 performs correcting processes simultaneously on both an image signal and a sound signal. As a result the image capturing device 1 is able to capture optimized natural moving images.

In a situation where a captured image scene changes from a "firework" to a "person", image capturing device 1 changes from a correcting process about the captured image scene of the "firework" to a correcting process about the captured image scene of the "person" simultaneously with respect to both an image signal and a sound signal. Consequently, image capturing device 1 does not perform correcting processes on captured image scenes that are different from each other with respect to an image signal and a sound signal, respectively. Image capturing device 1 can thus capture natural moving images even upon quick switching between captured image scenes.

According to the present exemplary embodiment, furthermore, it is possible to use not only identified captured image scenes, but also identified people or animals such as faces of people or faces of pets included in images. For example, prescribed identifying information for identifying a captured image scene including a person, among captured image scenes identified by a plurality of items of identifying information held in information holder 11, person image information for specifying a certain person, person image processing information for indicating an image correcting process for the certain person, and person sound processing information for indicating a sound correcting process for the certain person are related to each other and held in information holder 11. If the identifying information of a captured image scene of an image, which is selected from a plurality of captured image scenes, based on an image represented by an image signal, and the prescribed identifying information are in agreement with each other, then corrector 20 judges whether or not a person in the image represented by the image signal is the certain person specified by the image information. If corrector 20 decides that the person in the image is the certain person, then corrector 20 performs, on the image signal, a correcting process indicated by the person image processing information that is related to the person image information, and also performs, on the sound signal, a correcting process indicated by the person sound processing information that is related to the person image information.

For example, it is assumed that a certain "individual" is to be imaged in a captured image scene of a "person" while prescribed identifying information for identifying a captured image scene of a "person" (person), person image information for specifying a certain "individual" (certain person), person image processing information for indicating an image correcting process for an image of the face of the "individual", and person sound processing information for indicating a sound correcting process for a sound of the voice of the "individual" are registered in advance in information holder 11. When corrector 20 selects a captured image scene of a "person" based on an image signal, corrector 20 judges whether or not the "person" in the image represented by the image signal is the "individual". If corrector 20 decides that the "person" in the image is the "individual", then corrector 20 corrects the image signal and the sound signal based on the person image processing information and the person sound processing information.

In this manner, correcting processes for an image signal and a sound signal which are suitable for a captured image scene of a "person" are carried out, and the image signal and the sound signal are corrected in order to characterize the face of a specified "individual" and the sound of the "individual". For example, correcting processes for characterizing the face of a specified "individual" and the sound of the "individual" correct the skin color of the face of the "individual" and emphasize only the sound of the specified "individual" by filtering sounds included in the sound signal.

Image capturing device 1 is able to use an identified animal included in an image rather than an identified person included in the image. Specifically, image capturing device 1 holds prescribed identifying information for identifying a captured image scene including an animal, among captured image scenes identified by a plurality of items of identifying information held in information holder 11, animal image information for specifying a certain animal, animal image processing information for indicating an image correcting process for the certain animal, and animal sound processing information for indicating a sound correcting process for the certain animal, in association each other in information holder 11. If the identifying information of a captured image scene for images, which is selected from a plurality of captured image scenes, based on an image represented by an image signal, and the prescribed identifying information are in agreement with each other, then corrector 20 judges whether or not an animal in the image represented by the image signal is the certain animal specified by the image information or not. If corrector 20 decides that the animal in the image is the certain animal, then corrector 20 performs, on the image signal, a correcting process indicated by the animal image processing information that is related to the animal image information, and also performs, on the sound signal, a correcting process indicated by the animal sound processing information that is related to the animal image information.

Consequently, when image capturing device 1 is to image a certain animal, it can perform correcting processes applicable to the certain animal on an image signal and a sound signal, in addition to correcting processes used for a captured image scene of animals. Image capturing device 1 is thus capable of recording natural moving image data while at the same time emphasizing the certain animal.

According to the present exemplary embodiment, scene recognizer 21 selects a captured image scene using an image signal. However, scene recognizer 21 may specify the image capturing location or environment of a selected captured image scene based on detected information that is output from a GPS (Global Positioning System), a temperature sensor, or a pressure sensor, and correct a sound signal with respect to the image capturing location or environment. Image capturing device 1 is thus able to record more natural moving image data.

In the exemplary embodiment described above, the illustrated details are given by way of example only, and the present invention is not limited to those details.

This application is based upon and claims the benefit of priority from Japanese Patent Application No. 2010-183143 filed on August 18, 2010, the entire disclosure of which is incorporated herein by reference.

**Description of reference characters:**

| | |
|---|---|
| 1 | image capturing device |
| 11 | information holder |
| 12 | camera |
| 13 | microphone |
| 21 | scene recognizer |
| 22 | image adjuster |
| 23 | sound adjuster |
| 24 | synthesizer |
| 29 | adjuster |
| 30 | recorder |

## Claims

1. An image capturing device for capturing an image, comprising:
holding means that holds identifying information for identifying each of a plurality of captured image scenes, image processing information for indicating an image correcting process for each of a plurality of captured image scenes, and sound processing information for indicating a sound correcting process for each of a plurality of captured image scenes, in association with each other;
image capturing means that captures an image and generates an image signal representing the captured image;
acquiring means that acquires sounds and generates a sound signal when said image capturing means captures said image;
correcting means that selects one of said captured image scenes which represents the image represented by said image signal, based on said image, performs, on said image signal, a correcting process indicated by the image processing information that is associated with the identifying information about the captured image scene of said image, and performs, on said sound signal, a correcting process indicated by the sound processing information that is associated with the identifying information about the captured image scene of said image; and
recording means that records the image signal after said correcting process is executed and the sound signal after said correcting process is executed.

2. The image capturing device according to claim 1, wherein said holding means holds prescribed identifying information for identifying a captured image scene including a person among the captured image scenes, person image information for specifying a certain person, person image processing information for indicating an image correcting process for the certain person, and person sound processing information for indicating a sound correcting process for the certain person, in relation to each other; and
wherein if the identifying information of a captured image scene of said image, which is selected from the captured image scenes, based on the image represented by said image signal, and said prescribed identifying information are in agreement with each other, said correcting means judges whether or not a person in the image represented by the image signal is the certain person specified by the person image information, and if said correcting means decides that the person in the image is the certain person, said correcting means performs, on said image signal, a correcting process indicated by the person image processing information that is related to said person image information, and also performs, on said sound signal, a correcting process indicated by the person sound processing information that is related to said person image information.

3. The image capturing device according to claim 1, wherein said holding means holds prescribed identifying information for identifying a captured image scene including an animal from among the captured image scenes, animal image information for specifying a certain animal, animal image processing information for indicating an image correcting process for the certain animal, and animal sound processing information for indicating a sound correcting process for the certain animal, in relation to each other; and
wherein if the identifying information of a captured image scene of said image, which is selected from the captured image scenes, based on the image represented by said image signal, and said prescribed identifying information are in agreement with each other, said correcting means judges whether or not an animal in the image represented by said image signal is the certain animal specified by the animal image information, and if said correcting means decides that the animal in the image is the certain animal, said correcting means performs, on said image signal, a correcting process indicated by the animal image processing information that is related to said animal image information, and also performs, on said sound signal, a correcting process indicated by the animal sound processing information that is related to said animal image information.

4. A method of correcting images and sounds in an image capturing device for capturing an image, comprising:
holding identifying information for identifying each of a plurality of captured image scenes, image processing information for indicating an image correcting process for each of a plurality of captured image scenes, and sound processing information for indicating a sound correcting process for each of a plurality of captured image scenes, in association with each other in holding means;
capturing an image and generating an image signal representing the captured image;
acquiring sounds and generating a sound signal when said image is captured;
selecting one of said captured image scenes which represents the image represented by said image signal, based on said image, performing, on said image signal, a correcting process indicated by the image processing information that is associated with the identifying information about the captured image scene of said image, and performing, on said sound signal, a correcting process indicated by the sound processing information that is associated with the identifying information about the captured image scene of said image; and
recording the image signal after said correcting process is executed and the sound signal after said correcting process is executed.

5. The method according to claim 4, wherein said holding of the information in said holding means comprises:
holding prescribed identifying information for identifying a captured image scene including a person among the captured image scenes, person image information for specifying a certain person, person image processing information for indicating an image correcting process for the certain person, and person sound processing information for indicating a sound correcting process for the certain person, in relation to each other, in said holding means; and
wherein if the identifying information of a captured image scene of said image, which is selected from the captured image scenes, based on the image represented by said image signal, and said prescribed identifying information are in agreement with each other, said performing of the correcting processes comprises:
judging whether or not a person in the image represented by the image signal is the certain person specified by the person image information, and if it is decided that the person in the image is the certain person, performing, on said image signal, a correcting process indicated by the person image processing information that is related to said person image information, and performing, on said sound signal, a correcting process indicated by the person sound processing information that is related to said person image information.

6. The method according to claim 4, wherein said holding of the information in said holding means comprises:
holding prescribed identifying information for identifying a captured image scene including an animal among the captured image scenes, animal image information for specifying a certain animal, animal image processing information for indicating an image correcting process for the certain animal, and animal sound processing information for indicating a sound correcting process for the certain animal, in relation to each other in said holding means; and
wherein if the identifying information of a captured image scene of said image, which is selected from the captured image scenes, based on the image represented by said image signal, and said prescribed identifying information are in agreement with each other, said performing of the correcting processes comprises:
judging whether or not an animal in the image represented by said image signal is the certain animal specified by the animal image information, and if it is decided that the animal in the image is the certain animal, performing, on said image signal, a correcting process indicated by the animal image processing information that is related to said animal image information, and performing, on said sound signal, a correcting process indicated by the animal sound processing information that is related to said animal image information.

7. A computer-readable recording medium recording therein a program for enabling a computer in an image capturing device for capturing an image to perform:
a holding procedure for holding identifying information for identifying each of a plurality of captured image scenes, image processing information for indicating an image correcting process for each of a plurality of captured image scenes, and sound processing information for indicating a sound correcting process for each of a plurality of captured image scenes, in association with each other in holding means;
an image capturing procedure for capturing an image and generating an image signal representing the captured image;
an acquiring procedure for acquiring sounds and generating a sound signal when said image is captured;
a correcting procedure for selecting one of said captured image scenes which represents the image represented by said image signal, based on said image, performing, on said image signal, a correcting process indicated by the image processing information that is associated with the identifying information about the captured image scene of said image, and performing, on said sound signal, a correcting process indicated by the sound processing information that is associated with the identifying information about the captured image scene of said image; and
a recording procedure for recording the image signal after said correcting process is executed and the sound signal after said correcting process is executed.
